# EUROPEAN PATENT SPECIFICATION

(11) **EP 4 065 832 B1**
(45) Date of publication and mention of the grant of the patent: **25.10.2023**
(21) Application number: 20838133.5
(22) Date of filing: 26.11.2020
(51) Int. Cl.: F03B 15/02, F03B 13/06, E02B 9/00, E02B 9/06

(54) **ENERGY GENERATION AND WATER CONSERVATION**
ENERGIEERZEUGUNG UND WASSEREINSPARUNG
PRODUCTION D'ÉNERGIE ET CONSERVATION DE L'EAU

(30) Priority: 26.11.2019 GB 201917225; 12.02.2020 GB 202001941; 22.02.2020 GB 202002518; 17.05.2020 GB 202007289; 12.06.2020 GB 202008942
(43) Date of publication of application: 05.10.2022
(73) Proprietor: Manymickle Ltd, Godalming Surrey GU7 1DX (GB)
(72) Inventor: CULLIS, Roger, Surrey GU7 1DX (GB); CULLIS, Dominic, Surrey GU7 1DX (GB)
(74) Representative: IK-IP LTD
(86) International application number: PCT/GB2020/053018
(87) International publication number: WO 2021/105687

(56) References cited:
- EP-A1- 3 387 191
- CN-A- 105 256 782
- DE-B- 1 130 766
- US-A- 4 310 769

## Description

This invention relates to methods of alleviating the effects of climate change and, in particular to the utilisation of fluid systems for creation and generation of electrical and/or other energy. This application claims priority from UK patent applications numbers GB1917225.3, GB2001941.0, GB2002518.5, GB2007289.8 and GB2008942.1.

It is well known that the combustion of carbonaceous fuels contribute to climate change and that this effect can be mitigated by replacing vehicles propelled by such fuels with alternatives that are powed by electricity which can be stored in batteries.

Generation of electrical or other energy from water sources uses the gravitational potential energy of the water and occasionally in a flowing water source some of the kinetic energy also. The energy available is related to the mass of water that flows multiplied the net effective change in height from the effective inlet and outlet level. Physical barriers such as dams are often used to provide a store of water at a higher level.

US-B-6969935 and EP-A-3387191disclose energy generating arrangements or pumping arrangements in association with a canal lock system. They can generate energy when water flows downstream and may also be used as pumps to return water upstream, consuming energy.

An issue with canal systems is that they generally have a limited supply of water and disrupting the flow of water through them may cause unhelpful consequences. Simply trying to extract energy from water flowing through the canal may seem simplistically like a good idea but is problematic in practice and so despite canals and electricity generation being known for a very long time and the longstanding issue of a desire for renewable energy generation, practical systems have not been deployed.

According to a first aspect, the invention provides a water level control and energy recovery system for a canal having at least one lock, according to claim 1.

By using a canal state indication the flow through the lock and the energy generating arrangement may be varied for example from a maximum energy generation strategy if for example the canal is at a high level and reservoirs or rivers which feed the canal have plentiful water or there is a risk of flooding upstream to a maximum conservation strategy if water upstream of the lock is scarce or the canal level is low.

The canal state indication is derived from a measure of water level in at least one remote water source feeding the canal upstream of the lock. In some embodiments the canal state indication may be derived from multiple parameters or measurements or observations or policies but reduced to a single parameter (or small number of parameters) controlling a more conservative or more aggressive energy generation strategy. A numerical signal may be used but a more complex signal may also be used, for example having multiple subcomponents or thresholds (e.g. a do not pump flag or a minimum level threshold for flow or a modified flow versus water level curve).

The canal state indication may advantageously be derived from at least one predictive water availability parameter indicating likely future state of the canal. This may be derived from a seasonal parameter based on observed seasonal variation in water availability or based on predicted parameters based on observed water levels or weather and forecast rainfall or other measures relevant to upstream water levels.

The canal state indication may advantageously be derived from a measure of canal water levels downstream of the lock. The parameter may be adjusted to increase net water flow if the water level is low downstream of the lock or to reduce it if there is a risk of flooding.

In an advantageous arrangement, the control arrangement is arranged to receive at least one further input indicative of a measure of current or predicted energy demand and to adjust the flow in dependence of energy demand. Higher flow may be provided when canal state permits at times of actual or expected higher energy demand. If control includes pumping some water upstream, reduced pumping may be provided at times of higher energy demand. A time input may be provided as a measure of energy demand and a table of likely energy demand as a function of time may be stored.

The system may include a water storage arrangement and the control arrangement may be arranged to divert water into or from the water storage arrangement. The water storage arrangement may have a volume comparable to a typical lock volume, for example at least 100m^3 and be used cyclically in conjunction with lock cycles.

Desirably the system includes an intermediate conduit arranged for fluid communication with the water in the lock.

Desirably the system is operable selectively to recover energy from more than one of the following lock states:-
1. Water flowing into the lock, either (a) from the upstream canal or (b) storage arrangement if provided, with the lower gates closed to fill the lock
2. Water flowing out of the lock to empty the lock
3. Water bypassing the lock or flowing into the lock with the lower gates open

Desirably the system is operable selectively to pump water from within the lock with the lower gates closed either upstream or to the storage arrangement if provided.

The control arrangement may have sensors integrated into components of the lock to determine current lock state. Alternatively a human interface, for example with push buttons, may allow a user to indicate a selected current or intended lock state.

If the lock is powered or automated the control arrangement may be arranged to control some or all of the lock operation. In particular the control arrangement may control powered sluice gates associated with the lock.

The control arrangement may be arranged to monitor lock usage and predict lock usage and to modify the flow control strategy based on monitored or predicted lock usage.

In a desirable development the system is applied to more than one lock in a canal system and the control arrangement is arranged to adjust the flow control strategy for one lock in dependence on information from another lock in the system. For example if a first lock upstream of a second lock is opened to let a vessel pass downstream, the system can take into account both the expected short term increase in water flow and the likely subsequent passage of the vessel, for example in increasing flow and energy generation until the vessel arrives.

Even if the system is not physically applied to second lock, the canal state indication may be adjusted to include an indication of an upstream lock opening or likely vessel passage.

The flow may be controlled by regulating the power from and/or rotational speed of turbo generators in the flow conduit and/or by flow control valves. Regulating the flow may include switching turbogenerators into a pumping mode to pump water upstream.

The control arrangement may include a local controller arranged to control the arrangement and a remote server, typically connected over the internet. The remote server may derive complex control strategies and may communicate control strategies to a semi-autonomous local controller and/or may communicate information for controlling the lock apparatus directly. Control strategies may be viewed and displayed on GUI and may be modifiable by a user, for example to take into account expected developments with information not available to the controller.

The controller may use machine learning to determine estimated canal state from measured parameters or to modify control strategies based on observed measurements following application of an initial strategy.

The invention extends to corresponding methods and to a computer program or computer program product or logic for implementing or deriving the control strategies of the methods. The invention further extends to constructional methods and equipment and to a modified lock.

In a development, the above arrangement is applied to a cofferdam in a body of water in place of a lock, with the references to a lock being changed to a cofferdam and the sub features applying where applicable *mutatis mutandis* (the intermediate conduit would not apply for example).

The following description includes detail of a number of physical arrangements and techniques which may be useful in implementing or refining aspects of the invention or making use of its principles but are not to be considered limiting.

Accordingly, the present invention provides an electrical energy generating system comprising an input source of fluid having a first potential energy and an output for fluid having a potential energy lower than said first potential energy, wherein the input and output are separated by a cofferdam structure having a conduit linking the input and output and containing electrical generating means actuated by the passage of fluid between said input and output. Preferably this fluid is water.

By "cofferdam" is meant a structure or partition serving as a physical barrier against transfer of water or other fluid. This may be a simple dividing wall or the piston of a pump which controls the heat flow due to phase change in the operating fluid of a device such as a refrigerator or a heat pump.

Embodiments of the invention will now be particularly described with reference to the accompanying drawings, in which:-
- Figure 1: shows schematically, a prior art pumped storage electricity generator, exemplified by the Ffestiniog Power station, which was commissioned in 1963;
- Figure 2: shows schematically, a further prior art pumped storage electricity generator having a similar but alternative layout and installed by Engie-electrabel during the 1960s at Coo-Trois-Points in the Ardennes region of Belgium;
- Figure 3: is a map showing the geographic location of the UK system of canals, navigable rivers and reservoirs which were mainly constructed at the commencement of the Industrial Revolution in the eighteenth century;
- Figure 4: comprises schematic drawings of plan and elevational views of a pound lock in a navigable canal or river to permit a load-carrying vessel to traverse the transition between sections of the canal having different water levels due to variations in the local geographic topography;
- Figure 5A: is a schematic plan view of such a lock, provided with a bypass path with a receiving chamber having an input conduit to harvest water upstream of the lock, an evacuating chamber with an output conduit to return the water to the canal or river downstream of the lock, and a cofferdam structure with a conduit for the flow of water between the receiving and evacuating chambers, said conduit being provided with apparatus to generate electricity in response to the flow of water between said chambers;
- Figure 5B: is a schematic elevational view of the embodiment shown in Figure 5A;
- Figure 6: is a schematic view of a reservoir, typified by the Toddbrook Reservoir at Whaley Bridge in the High Peak Area of Derbyshire, but with separate storage regions having a cofferdam structure with integral electricity generating means to generate electricity in response to the flow of water therethrough between said regions and electrical pumping means operable to pump water between said regions;
- Figure 7: is a schematic elevational section through the dam of the reservoir of Figure 6 with an auxiliary cofferdam having a turbo pump-generator to transfer water to and from the main reservoir;
- Figure 8: is an illustration of a mountain lake, typically found in Spain, Austria and Switzerland;
- Figures 9a and 9b: are respectively plan and elevational views of cofferdam structures to provide pumped storage generation of electricity by means of water from such lakes;
- Figure 10: is a plan view of a weir and leat system constructed to provide a motive water supply to a plurality of water mills;
- Figure 11: shows a turbogenerator which generates an electrical supply in response to the passage of water therethrough;
- Figure 12: shows a typical plumbing arrangement for the supply of water to a domestic dwelling;
- Figure 13: depicts schematically a simulated or virtual method and apparatus for the generation of electricity based on the physical embodiment depicted in Figures 5A and 5B;
- Figure 14: shows an embodiment comprising a virtual pound lock depicted in Figure 13, but provided with auxiliary means for generation and storage of hydrogen and oxygen; -and
- Figure 15: shows a virtual pound lock, electrolytic gas generator as depicted in Figure an embodiment but further including a physical pound lock gate to enhance and better control the flow of water therethrough and thereby to reduce the risk of flooding from the associated water source;
- Figure 16: is a schematic diagram of a controller according to the invention; and
- Figure 17: is a schematic diagram of a system according to the invention applied to a lock.

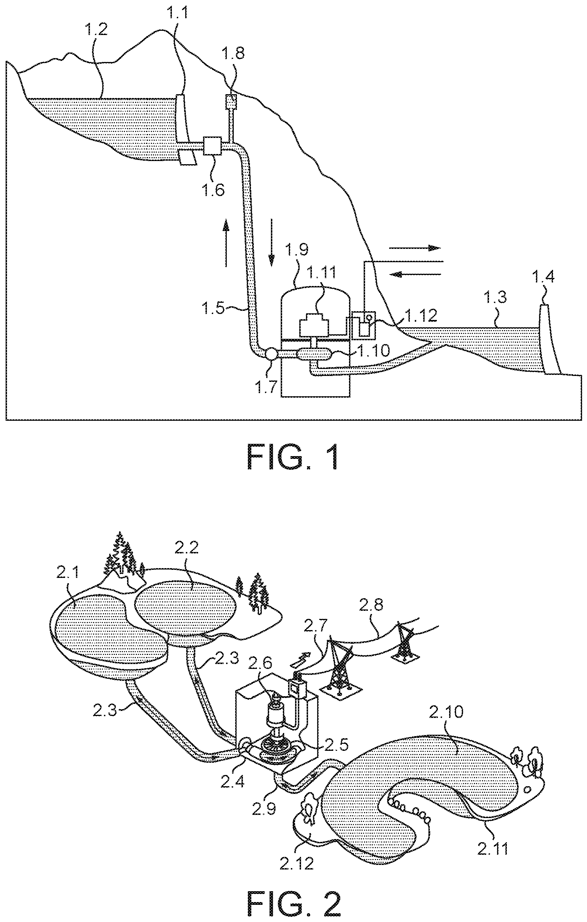

Referring now to Figure 1 of the drawings, at Ffestiniog in Wales the geographic topography made it feasible to store water contained by a dam 1.1 in an upper basin 1.2 and a lower basin 1.3 contained by a second dam 1.4. The two basins are connected by a conduit 1.5. Water may be pumped upwards through this conduit to be stored in the upper basin or be returned under the influence of gravity to the lower basin. This is controlled by a valve chamber 1.6 and a rotary valve 1.7. A surge tank 1.8 releases excess pressure. The conduit 1.5 passes through a power house 1.9 which is located between the upper and lower basins. It directs the flow through a pump turbine 1.10 connected to a generator 1.11 either to generate electricity or raise the water to the higher level. A transformer 1.12 is connected to the external electricity grid either to supply energy when in delivery mode or consume energy when in storage mode.

At Coo-Trois-Points a pumped storage system operates on a similar principle which is illustrated in Figure 2. It has two separate upper basins 2.1, 2.2 each connected by pressure pipes 2.3 to an engine room 2.4. The engine room contains a pump turbine 2.5 and generator 2.6 with high voltage lines 2.7 connected to the external power grid 2.8. A further pressure pipe 2.9 connects the engine room to a lower water basin 2.10 within a containing dam 2.11 and access 2.12 to an external water supply 2.13.

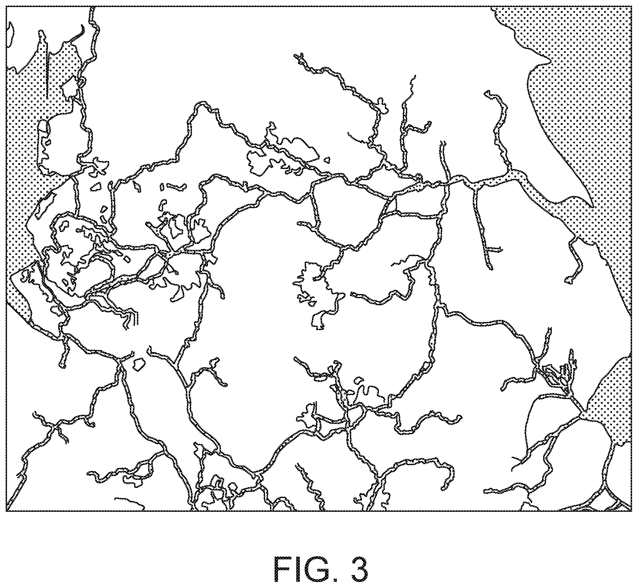

At the start of the industrial Revolution, freight was carried by pack horse. Pioneers, such as the Duke of Bridgewater, who wanted to transport coal from his coal mines to consumers in centres of population such as Liverpool and Manchester, constructed a network of canals shown in Figure 3. This permitted a vessel carrying a load of 30 tons and pulled by a single horse to replace a large train of pack-horses, with commensurate cost savings. Industries, such as potteries in the Midlands, also used the canals to transport their fragile products to purchasers, thereby alleviating the losses due to handling breakage in the packhorse trains.

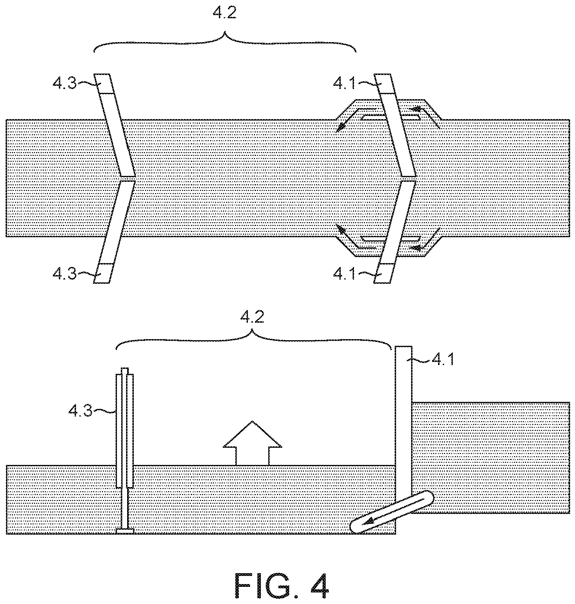

The English canal and navigable river network (Figure 3) covers an area of varying geographic topography. In order to overcome uneven terrain through which they pass, the canals were provided with pound locks to connect sections of the canals at different levels. As shown in Figure 4 of the drawings, these locks customarily each had paired upper gates 4.1 connected between the upstream section of the canal and its operating section 4.2 in which the level of the water could be changed and a further double gate 4.3 connecting the lock to the downstream section of the canal. By opening the respective double gate the level of water in the lock was equalised with that of the upstream or downstream section of the canal. Culverts 4.4 controlled by valves (not shown) permit water to be introduced into the lock to reduce the initial force necessary to open the gate in order to allow the level of the water to be raised.

This principle was used in the construction of the Panama Canal, where a high-level lake fed downstream locks used to permit ships travelling between the Atlantic and Pacific Oceans to traverse the elevated geographic topography of the intervening Panamanian land mass.

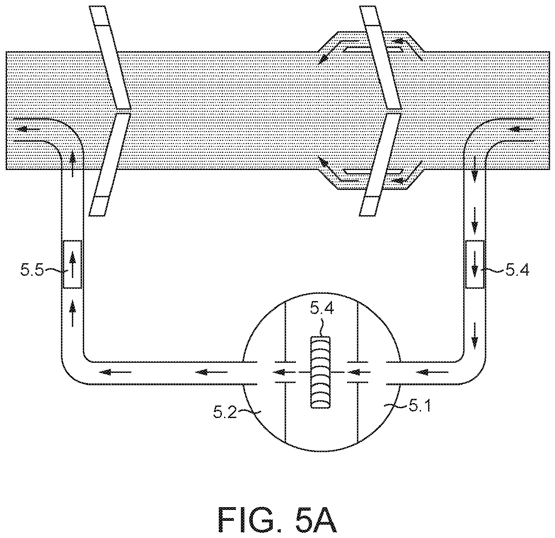

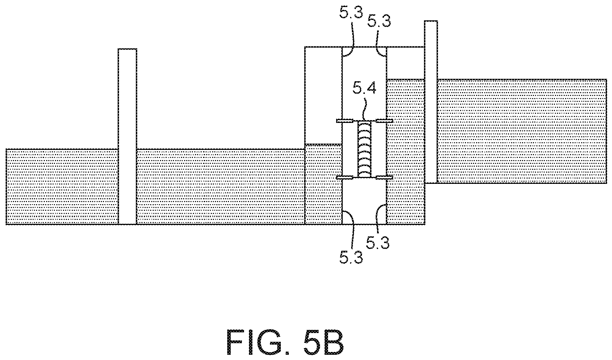

In accordance with a specific embodiment of the invention, the lock shown in Figure 4 is provided with a bypass path shown in schematic plan view in Figure 5A and elevational view in Figure 5B to transfer water from the section of the canal or river upstream to the section downstream of the lock. This bypass path includes a receptacle having an input chamber 5.1 and an output chamber 5.2 separated by a cofferdam structure 5.3 containing a turbo-generator 5.4 to generate electricity when actuated by the flow of water from the input chamber to the output chamber. The flow of water is indicated by the arrows shown. The drop in potential energy of the water (due to the height of the lock) as it traverses the lock provides the motive power to operate the turbo-generator. This transfer of water (effectively, leakage of the lock) will have a negligible influence on the depth of the water in the canal since the change in this will only be equal to the height difference of the geographic topography spanned by the lock multiplied by the surface area of the input chamber and divided by the surface area of the canal from its upstream gate to the downstream gate of the next lock on the canal, and, typically, will be no more than a few millimetres, thus having a negligible deleterious effect on the passage of vessels along the canal. The flow of water through the turbo-generator may be increased in response to demand by an input pump 5.4 in the input conduit and a complementary output pump 5.5 in the output conduit. The input and output pumps may be controlled in response to changes in demand from the electricity supply grid. This control may also be subjected to sensors (not shown) of the water level of the input and output sections of the canal to prevent these levels departing catastrophically from predetermined values.

Each time a vessel traverses the lock, water is drained from the high-level section of the canal. In order to replace this loss, reservoirs, such as the Toddbrook Reservoir were therefore constructed by building dams to trap rain water which fell on higher ground. These reservoirs were connected to the navigable canals to maintain the level of water which was diminished by the passage of vessels through the locks. Buildings, typically dwelling houses, were frequently constructed in the sheltered lee of these dams.

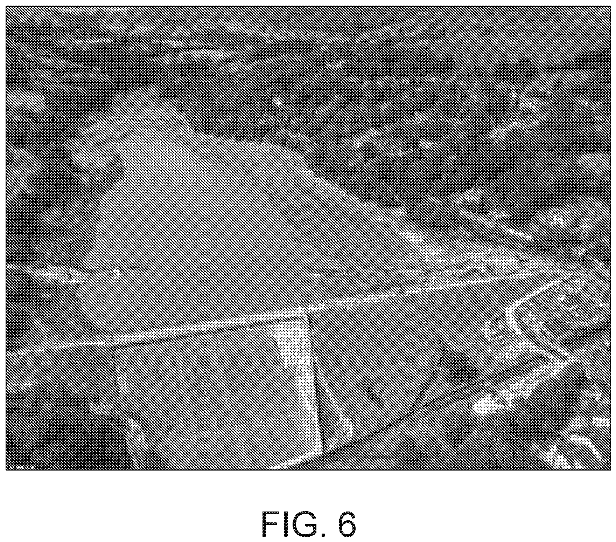

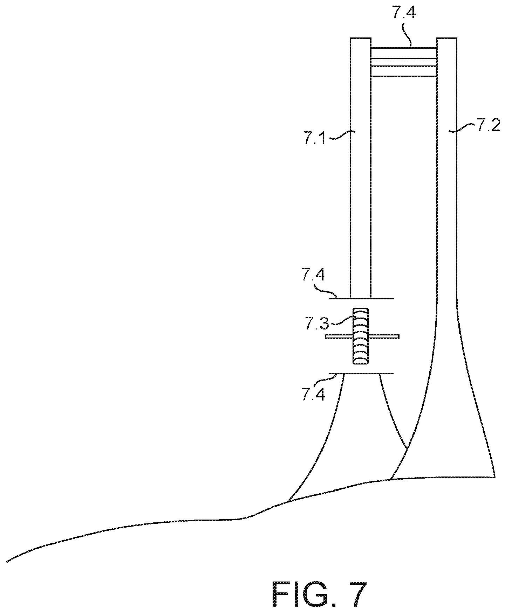

In accordance with another specific embodiment of the invention, such a reservoir, shown in Figures 6 and 7, may be provided with a cofferdam structure 7.1, within and supplementary to the main dam 7.2, but containing a turbo-generator/pump 7.3 to utilise the reservoir for both pumped storage and for continuous electricity generation using the water flowing in from rainfall. The cofferdam structure serves an auxiliary purpose, to protect the main dam against catastrophic surcharge effects, such as that experienced at Whaley Bridge and it may be constructed with a bridging structure 7.4 to provide access for servicing both the turbo-generator and the normal access pipework, without the necessity and inconvenience of draining the reservoir. Advantageously, the cofferdam structure may be constructed using civil engineering techniques described by Gordon Rollinson in NRDC Bulletin No. 51 pp16-18 (1980*).* (A copy of this was deposited with the former UK Patent Office Library) and may now be consulted at the British Library. Preferably, the bridging structure 7.4 is positioned somewhat below the tops of the dam and cofferdam. It supports a pedestrian or vehicular path for access from side to side of the reservoir and a layer of earth (not shown) in which vegetation may be planted to preserve the natural beauty of the reservoir. The reservoirs themselves are features of outstanding natural beauty and, by constructing the cofferdam structure in this way, it will not detract from this beauty.

As shown schematically in Figure 7, the auxiliary cofferdam 7.1 is constructed adjacent to, parallel with and spaced apart from the main dam 7.2. The cofferdam is provided with a turbo-generator 7.3 to generate electricity using stored water fed to the reservoir after rainfall. Auxiliary vents and conduits (not shown) are provided to remove excess water, which is discharged to the normal overflow path.

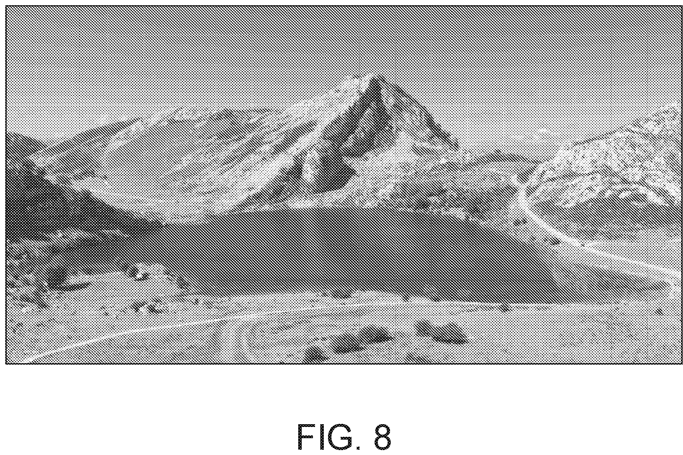

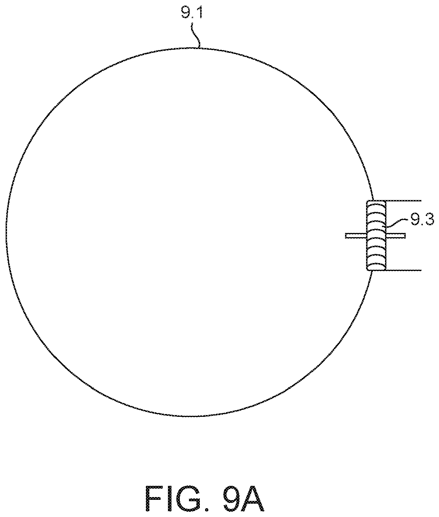

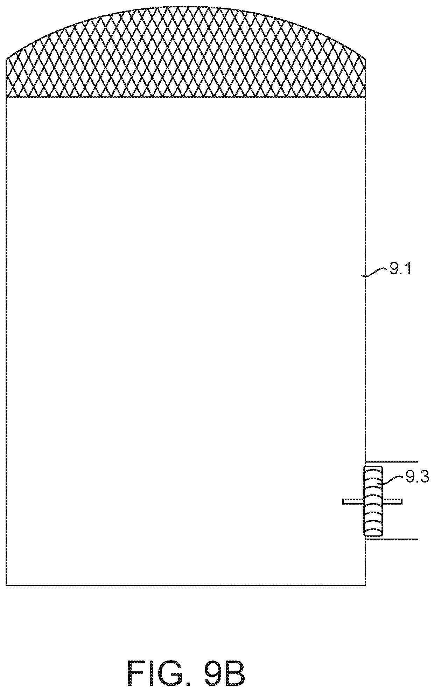

Figure 8 is a schematic illustration of an isolated lake, such as may be found in the Lake District of England or the Scottish lochs or Spain, Austria or Switzerland. In accordance with another embodiment of this invention, such lakes may also be used for pumped storage generation of electricity by the use of a cofferdam structure 9.1, shown in plan view in Figure 9a and in elevation view in Figure 9b. Contrary to normal practice, water is pumped out of the structure by the turbo-generator 9.3 and returns by gravitational pressure to generate electricity. The cables (not shown) connecting the turbo-generator to the grid supply may conveniently be laid from the base of the structure to the external connection point. The cofferdam may be capped and provided with earth and vegetation to give the appearance of an island in the lake, thus not detracting from its natural beauty. An archipelago of such islands (not specifically illustrated), interconnected by a network of basal conduits fitted with controlling pumps and valves, will provide a flexible pumped storage electricity generating system which keeps the mean water level in the lake constant and protects against flooding. Such a system may also, conveniently, be appended to reservoirs storing water for other purposes. Electricity generating means may also be installed at the normal outflow location.

Whilst the embodiments of the invention described specifically utilised water as the working fluid, it will be apparent that other fluids, such as atmospheric air, fall within the ambit of the invention. For example, it is applicable to systems using Venturi tubes to utilise atmospheric pressure differences created by meteorological weather fronts and, in particular, by thunderstorms. Cofferdam structures constructed for the harvesting of water in association with locks or weirs for other industrial purposes such as mills may also be adapted to generate electricity. Auxiliary priming and/or flow-enhancing pumps may also be provided with standby batteries. It will also be apparent that the arrangements of water supplies for mills and the like, and typically with weirs and leats to control the flow of water, constructed since Saxon times may be adapted in accordance with the principles of this invention for the pumped-storage generation of electricity. Furthermore, the geographic distribution of the local generating facilities means that their control system may be constructed so that the electricity supplied to the grid can respond to changes in demand created locally, thereby increasing grid supply security.

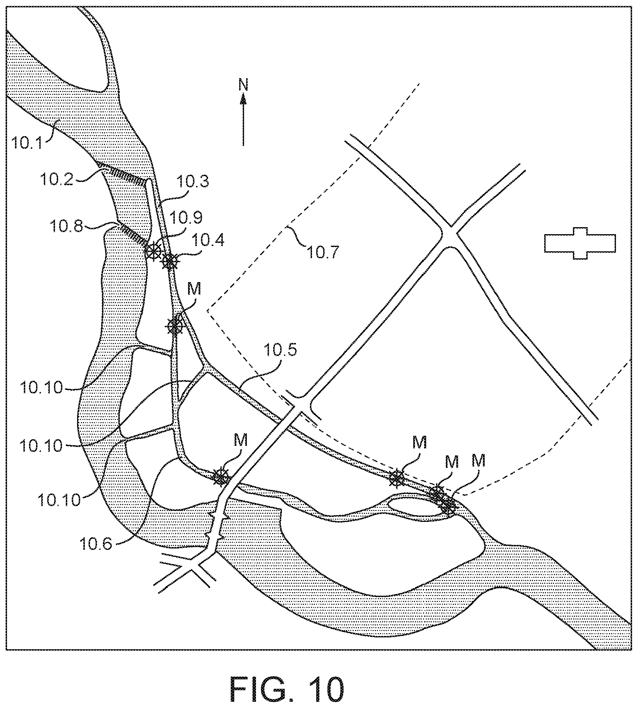

A typical medieval arrangement of weirs and leats, exemplified by the River Exe system at Exeter, is illustrated in Figure 10. The River Exe 10.1 has a weir 10.2 with a principal leat 10.9 feeding a water engine 10.4 to supply water to the city before dividing into an upper and lower leat 10.5, 10.6 to power various mills M constructed outside the city wall 10.7 for corn milling, fulling and other industrial purposes. A second weir 10.8 downstream of the head weir supplies a head mill 10.9. Cross leats 10.10 regulate the water flow to the mills to ensure that each mill has sufficient water. A cofferdam structure (not shown), similar to that described previously in relation to a pound lock, containing an electricity generator is fed with water from either the upper or the lower leat and its water output is exhausted either to a downstream leat or directly downstream to the river.

River and canal systems, such as those described, flow continuously to the sea. During times of heavy rain fall it is necessary for measures to be taken to prevent flooding, usually by diverting the water into another channel. Advantage may be taken of this excess water to drive further electricity generators. Surplus electricity from this source may be utilised for electrolysis of water. Hydrogen generated in this way may be distributed to users through the gas supply network, either as a supplement to natural hydrocarbons or, when the gas supply is converted to a hydrogen-based system, as an additional source. Such local connections are analogous to the system of town gas works and storage holders which was previously the norm which was abandoned only with the advent of natural gas supplies from the North Sea and elsewhere..

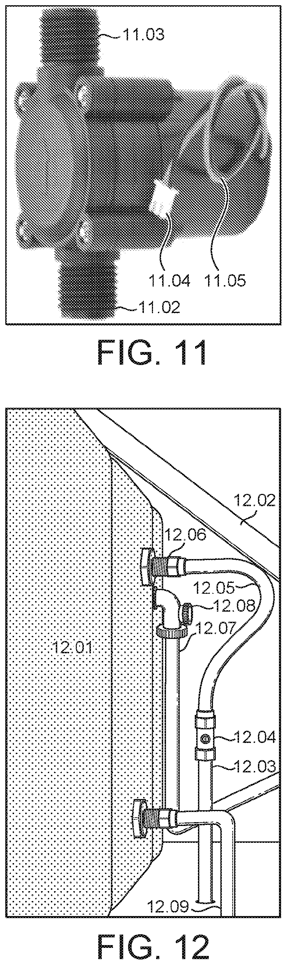

The embodiment shown in Figures 11 and 12, relates to the temporal security of electrical supply systems for domestic and other premises. For example, premises provided with a solar cell installation will conventionally have a storage battery to permit the electricity supply to be continuous, but this will only be recharged when solar energy is available and thus it is desirable to have an auxiliary electricity supply to top up this battery at other times. Mains water supply to domestic and other premises needs to be at a pressure which is high enough to raise the water to fill a header tank which is mounted at the highest available point of the premises, which may typically be just below roof level. Furthermore, the general pressure pf the water main will need to be sufficiently high to fill header tanks in the tallest buildings in the distribution network and this will create an excess pressure energy source which may be utilised for other purposes. If, conveniently, there is a nearby aqueduct or the mains supply pipe passes over a nearby hill, the excess pressure will be sufficiently high to drive a more powerful turbine.

A turbo-generator 11.01 is preferably mounted between the isolating ball valve 12.04 and the flexible coupling 12.05 so that, each time water is fed to the storage tank, a trickle electrical charge is available via the connector 11.4. Conveniently, this charge may be utilised to top up a battery connected to solar panels (not shown) mounted externally on the roof of the premises. The specification of the turbo-generator will be chosen so that the trickle charge is supplied at an appropriate voltage for this battery.

A further turbo-generator, or a plurality thereof, may additionally or alternatively be connected to the outlet pipe 12.09 of the storage tank to generate a trickle charge each time water is drawn from the tank. Furthermore, as will be apparent to those skilled in the art, the principle of this invention may be applied to any electrical generating system, such as a so-called solar farm, by the provision of a suitably-placed water storage tank. It will also be apparent that the invention may be adapted to increase the security of supply of other intermittent electrical energy sources, such as wind generators. For example, a household with a smart meter might have one or more batteries which are charged during the night, when electricity is cheapest and used during peak hours. There are times when there is excess electricity in the grid (e.g. sudden change in weather, becoming more sunny and windy, so that much electricity is being generated, but power stations haven't yet been ramped down, which can take two days). At such times, consumers can be paid to take power off the grid. A smart meter may also be set for the battery to charge when electricity drops below a certain price per kWh.

In locations, such as when the water supply passes over an aqueduct, or has a supply pipe from a pumping station which passes over a hill, advantage may be taken of the associated increased pressure to drive a more powerful turbine and extract the energy which would otherwise be wasted..

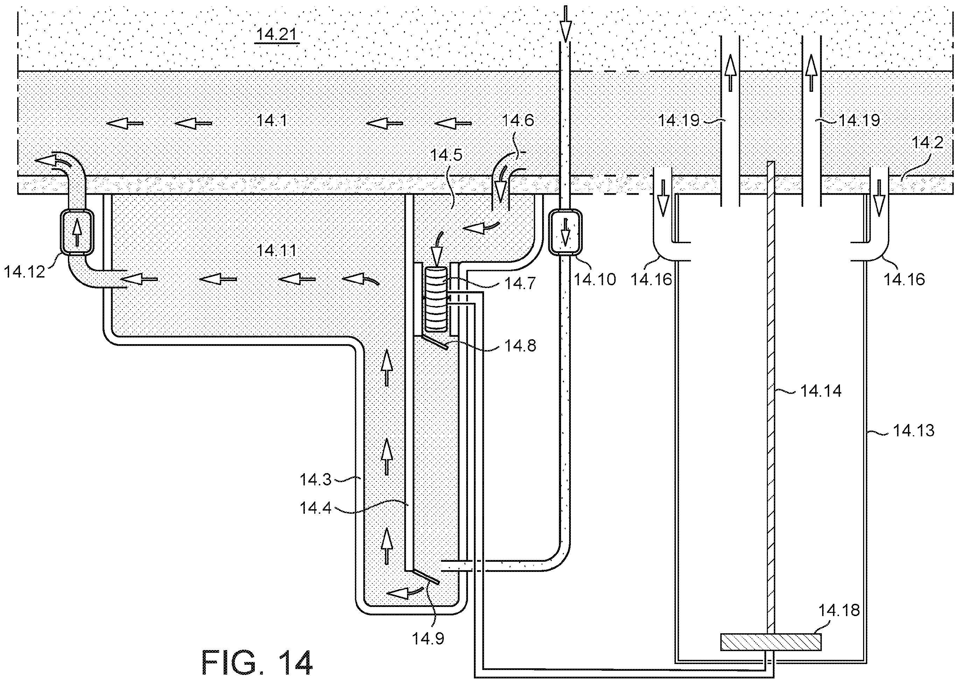

Figure 14 shows a virtual pound lock system provided with auxiliary means to generate and store gaseous oxygen and hydrogen for use as a green gaseous chemical energy source. It illustrates a schematic elevational view of a water source such as a lake or canal 14.1 flowing in the direction indicated by the arrows. Laterally displaced therefrom, but adjacent a riparian bank of the water source, is a strong platform 14.2 which, conveniently, is formed of interlocking reinforced concrete beams. This platform may carry a plurality of charging stations and the associated ancillary equipment for fully, or partially, electrically powered vehicles. It may also have access points (not shown) for servicing the subterranean components of the pound lock generator, a specific embodiment of which includes a pump chamber 14.3, 60 cm in diameter and slightly over 5m in depth (the typical height of the upstream gate of a physical pound lock), which has been excavated by a screw auger and extends vertically below the platform 14.2. A cofferdam 14.4, which extends from this platform to a distance 30 cm from the base of the pump chamber, divides the pump chamber into two substantially equal parts. An input chamber 14.5 is connected via a conduit 14.6 to the water source 14.1 to permit the ingress of water therefrom. The input chamber, may be provided with filtration means (not shown), to clarify this water before its onward transmission. A turbo-generator 14.7 is positioned at the input to the pump chamber, which is provided with a valve 14.8 which serves as the upstream gate to the system (corresponding to the upstream gate of a physical pound lock). A second valve 14.9, positioned at the base of the cofferdam, serves as the analogue of the downstream gate of a physical pound lock, but it will be appreciated by those skilled in the art that the action of this valve is inherent in the operation of the system pump, as it is performed functionally by the injection of air into the pump chamber by the air pump 14.10 which is fed from the atmosphere 14.21 above the level of the water in the water source. The output side of the pump chamber feeds an output chamber 14.11, the size of which is chosen so that, when filled, the turbo-generator will have delivered a predetermined electrical charge to a temporary storage battery (not shown). A water pump 14.12 connected via an output conduit is provided to evacuate the output chamber 14.11. The cycle of operation is that, when the temporary battery needs to be charged, the upstream gate valve 14.8 is opened to fill the output chamber to a level determined by a sensor (not shown). This sensor causes the upstream gate valve to close and the air pump 14.10 to be actuated. When the input side of the pump chamber is full of air (indicated by a further sensor (also not shown)), the air pump is switched off and the upstream gate valve opened to allow the input side of the pump chamber to be filled from the water source by gravitational action. This cycle is repeated until the temporary storage battery has received a sufficient charge.

A substantially vertical gas storage chamber 14.13, analogous to a gas holder in earlier town gas supply systems, is divided into two compartments by a cofferdam structure 14.14 fed from the water supply by conduits 14.16 adjacent the cofferdam, at the base of which is a polymer electrolyte membrane 14.18 or alternative arrangement for electrolytically splitting the water. Using the power supply from the turbo 14.7, this separates water from the water supply into its separate hydrogen and oxygen components. The hydrogen or other gaseous fuel may be used to power vehicles directly by means of fuel cells or may be fed to a gas distribution network in which it may be utilised to enrich natural gas or distributed directly to consumers. Conveniently, a plurality of such storage chambers may be disposed in a sacrificial network and, when flooding from the upstream water source is imminent the situation may be relieved, in emergency, by evacuating the stored gas to the atmosphere 14.20 via exhaust pipes 14.21 using control valves (not shown).

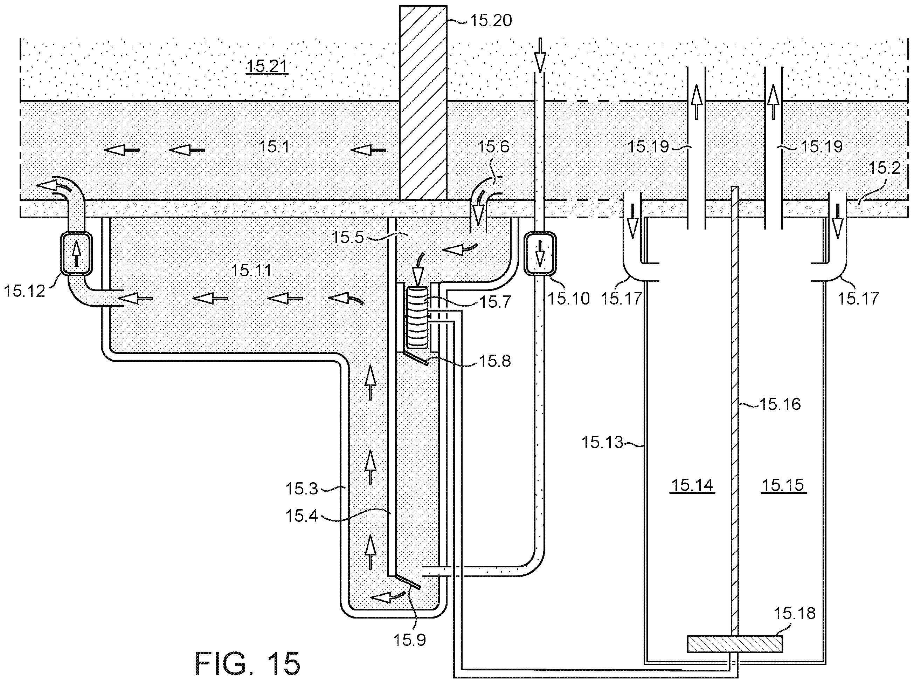

Figure 15 shows an adaptation of the embodiment shown in Figure 14 with the addition of a physical lock gate to provide enhanced control for water flowing in a river or canal 15.1 flowing in the direction indicated by the arrows. Laterally displaced therefrom, but adjacent a riparian bank of the water source, is a strong platform 15.2 which, conveniently, is formed of interlocking reinforced concrete beams. This platform may carry a plurality of charging stations and the associated ancillary equipment for fully, or partially, electrically powered vehicles. It may also have access points (not shown) for servicing the subterranean components of the pound lock generator, a specific embodiment of which includes a pump chamber 15.3, 60 cm in diameter and 15m in depth (significantly greater than the typical height of the upstream gate of a physical pound lock), which has been excavated by a screw auger and extends vertically below the platform 15.2. A cofferdam 15.4, which extends from this platform to a distance 30 cm from the base of the pump chamber, divides the pump chamber into two substantially equal parts. An input chamber 15.5 is connected via a conduit 15.6 to the water source 15.1 to permit the ingress of water therefrom. The input chamber, may be provided with filtration means (not shown), to clarify this water before its onward transmission. A turbo-generator 15.7 is positioned at the input to the pump chamber, which is provided with a valve 15.8 which serves as the upstream gate to the system (corresponding to the upstream gate of a physical pound lock). A second valve 15.9, positioned at the base of the cofferdam, serves as the analogue of the downstream gate of a physical pound lock, but it will be appreciated by those skilled in the art that the action of this valve is inherent in the operation of the system pump, as it is performed functionally by the injection of air into the pump chamber by the air pump 15.10 which is fed from the atmosphere 15.21 above the level of the water in the water source. The output side of the pump chamber feeds an output chamber 15.11, the size of which is chosen so that, when filled, the turbo-generator will have delivered a predetermined electrical charge to a temporary storage battery (not shown). A water pump 15.12 connected via an output conduit is provided to evacuate the output chamber 15.11. The cycle of operation is that, when the temporary battery needs to be charged, the upstream gate valve 15.8 is opened to fill the output chamber to a level determined by a sensor (not shown). This sensor causes the upstream gate valve to close and the air pump 15.10 to be actuated. When the input side of the pump chamber is full of air (indicated by a further sensor (also not shown)), the air pump is switched off and the upstream gate valve opened to allow the input side of the pump chamber to be filled from the water source by gravitational action. This cycle is repeated until the temporary storage battery has received a sufficient charge.

A substantially vertical gas storage chamber 15.13, analogous to a gas holder in earlier town gas supply systems, is divided into compartments for hydrogen 15.14 and oxygen by a cofferdam structure 15.14 fed from the water supply by conduits 15.16 adjacent the cofferdam, at the base of which is a polymer electrolyte membrane 15.18 or alternative arrangement for electrolytically splitting the water. Using the power supply from the turbo 15.7, this separates water from the water supply into its separate hydrogen and oxygen components. The hydrogen or other gaseous fuel may be used to power vehicles directly by means of fuel cells or may be fed to a gas distribution network in which it may be utilised to enrich natural gas or distributed directly to consumers. Conveniently, a plurality of such storage chambers may be disposed in a sacrificial network and, when flooding from the upstream water source is imminent the situation may be relieved, in emergency, by evacuating the stored gas to the atmosphere via exhaust pipes 15.19 using control valves (not shown). A single physical lock gate 15.20, with paddles (also not shown) may be opened also to relieve upstream flooding.

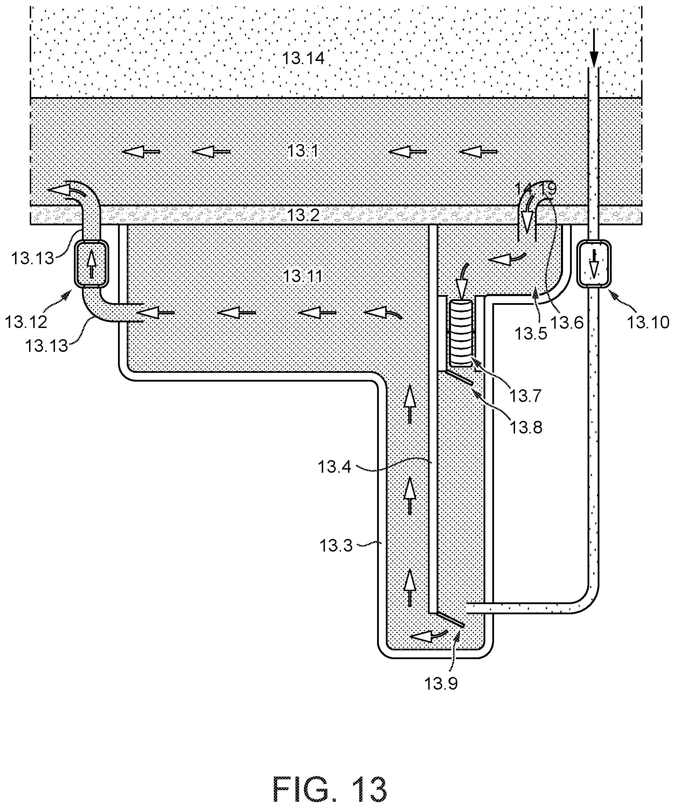

Figure 13 is a schematic elevational view of a canal or river 13.1 flowing in the direction indicated by the arrows. Laterally displaced therefrom but adjacent the bank of the canal is a strong platform 13.2 which, conveniently, is formed of interlocking reinforced concrete beams. This platform may carry a plurality of charging stations and the associated ancillary equipment for fully or partially electrically powered vehicles. It may also have access points (not shown) for servicing the subterranean components of the simulated pound lock generator, a specific embodiment of which comprises a pump chamber 13.3, 60 cm in diameter and slightly over 5m in depth (a typical height of the upstream gate of a physical pound lock), which has been excavated by a screw auger and extends vertically below the platform 13.2. A cofferdam 13.4, which extends from this platform to a distance 30 cm from the base of the pump chamber, separates the pump chamber into two substantially equal parts. An input chamber 13.5 is connected via a conduit 13.6 to the canal 13.1 to permit the ingress of water. The input chamber may be provided with filtration means (not shown) to clarify this water before its onward transmission. A turbo-generator 13.7 is positioned at the input to the pump chamber, which is provided with a valve 13.8 which serves as the upstream gate to the system (corresponding to the upstream gate of a physical pound lock). A second valve 13.9 is positioned at the base of the cofferdam serves as the analogue of the downstream gate of a physical pound lock, but it will be appreciated by those skilled in the art that the function of this valve is inherent in the operation of the system pump action, as it is performed by the injection of air into the pump chamber by the air pump 13.10 which is fed from the air 13.14 above the level of the water in the canal. The output side of the pump chamber feeds an output chamber 13.11, the size of which is chosen so that, when filled the turbo-generator will have delivered a predetermined electrical charge to a temporary storage battery (not shown). A water pump 13.12 connected via output conduits 13.13 is provided to evacuate the output chamber 13.11. The cycle of operation is that, when the temporary battery needs to be charged, the upstream gate valve 13.8 is opened to fill the output chamber to a level determined by a sensor (not shown). This sensor causes the upstream gate valve to close and the air pump 13.10 to be actuated. When the input side of the pump chamber is full of air (indicated by a further sensor (not shown) the air pump is switched off and the upstream gate valve opened to allow the input side of the pump chamber to be filled from the canal by gravitational action. This cycle is repeated until the temporary storage battery has received a sufficient charge.

The embodiment shown in Figure 14 incorporates auxiliary means for generating hydrogen from the potential energy of a flowing stream of water. This embodiment, shown in schematic elevational view of a water source such as a lake or canal 14.1 flowing in the direction indicated by the arrows. Laterally displaced therefrom, but adjacent a riparian bank of the water source, is a strong platform 14.2 which, conveniently, is formed of interlocking reinforced concrete beams. This platform may carry a plurality of charging stations and the associated ancillary equipment for fully, or partially, electrically powered vehicles. It may also have access points (not shown) for servicing the subterranean components of the pound lock generator, a specific embodiment of which includes a pump chamber 14.3, 60 cm in diameter and slightly over 5m in depth (the typical height of the upstream gate of a physical pound lock), which has been excavated by a screw auger and extends vertically below the platform 14.2. A cofferdam 14.4, which extends from this platform to a distance 30 cm from the base of the pump chamber, divides the pump chamber into two substantially equal parts. An input chamber 14.5 is connected via a conduit 14.6 to the water source 14.1 to permit the ingress of water therefrom. The input chamber, may be provided with filtration means (not shown), to clarify this water before its onward transmission. A turbo-generator 14.7 is positioned at the input to the pump chamber, which is provided with a valve 14.8 which serves as the upstream gate to the system (corresponding to the upstream gate of a physical pound lock). A second valve 14.9, positioned at the base of the cofferdam, serves as the analogue of the downstream gate of a physical pound lock, but it will be appreciated by those skilled in the art that the action of this valve is inherent in the operation of the system pump, as it is performed functionally by the injection of air into the pump chamber by the air pump 14.10 which is fed from the atmosphere 14.14 above the level of the water in the water source. The output side of the pump chamber feeds an output chamber 14.11, the size of which is chosen so that, when filled, the turbo-generator will have delivered a predetermined electrical charge to a temporary storage battery (not shown). A water pump 14.12 connected via an output conduit is provided to evacuate the output chamber 14.11. The cycle of operation is that, when the temporary battery needs to be charged, the upstream gate valve 14.8 is opened to fill the output chamber to a level determined by a sensor (not shown). This sensor causes the upstream gate valve to close and the air pump 14.10 to be actuated. When the input side of the pump chamber is full of air (indicated by a further sensor (also not shown)), the air pump is switched off and the upstream gate valve opened to allow the input side of the pump chamber to be filled from the water source by gravitational action. This cycle is repeated until the temporary storage battery has received a sufficient charge.

A substantially vertical gas storage chamber 14.13, analogous to a gas holder in earlier town gas supply systems, is divided into two compartments by a cofferdam structure 14.14 fed from the water supply by conduits 14.16 adjacent the cofferdam, at the base of which is a polymer electrolyte membrane 14.18 or alternative arrangement for electrolytically splitting the water. Using the power supply from the turbo 14.7, this separates water from the water supply into its separate hydrogen and oxygen components. The hydrogen or other gaseous fuel may be used to power vehicles directly by means of fuel cells or may be fed to a gas distribution network in which it may be utilised to enrich natural gas or distributed directly to consumers. Conveniently, a plurality of such storage chambers may be disposed in a sacrificial network and, when flooding from the upstream water source is imminent the situation may be relieved, in emergency, by evacuating the stored gas to the atmosphere via exhaust pipes 14.19 using control valves (not shown).

The invention will now be particularly described with reference to Figure 15 of the accompanying drawing of a specific embodiment which illustrates a schematic elevational view of a water source such as a lake or canal 15.1 flowing in the direction indicated by the arrows. Laterally displaced therefrom, but adjacent a riparian bank of the water source, is a strong platform 15.2 which, conveniently, is formed of interlocking reinforced concrete beams. This platform may carry a plurality of charging stations and the associated ancillary equipment for fully, or partially, electrically powered vehicles. It may also have access points (not shown) for servicing the subterranean components of the pound lock generator, a specific embodiment of which includes a pump chamber 15.3, 60 cm in diameter and 15m in depth (significantly greater than the typical height of the upstream gate of a physical pound lock), which has been excavated by a screw auger and extends vertically below the platform 15.2. A cofferdam 15.4, which extends from this platform to a distance 30 cm from the base of the pump chamber, divides the pump chamber into two substantially equal parts. An input chamber 15.5 is connected via a conduit 15.6 to the water source 15.1 to permit the ingress of water therefrom. The input chamber, may be provided with filtration means (not shown), to clarify this water before its onward transmission. A turbo-generator 15.7 is positioned at the input to the pump chamber, which is provided with a valve 15.8 which serves as the upstream gate to the system (corresponding to the upstream gate of a physical pound lock). A second valve 15.9, positioned at the base of the cofferdam, serves as the analogue of the downstream gate of a physical pound lock, but it will be appreciated by those skilled in the art that the action of this valve is inherent in the operation of the system pump, as it is performed functionally by the injection of air into the pump chamber by the air pump 15.10 which is fed from the atmosphere 15.14 above the level of the water in the water source. The output side of the pump chamber feeds an output chamber 15.11, the size of which is chosen so that, when filled, the turbo-generator will have delivered a predetermined electrical charge to a temporary storage battery (not shown). A water pump 15.12 connected via an output conduit is provided to evacuate the output chamber 15.11. The cycle of operation is that, when the temporary battery needs to be charged, the upstream gate valve 15.8 is opened to fill the output chamber to a level determined by a sensor (not shown). This sensor causes the upstream gate valve to close and the air pump 15.10 to be actuated. When the input side of the pump chamber is full of air (indicated by a further sensor (also not shown)), the air pump is switched off and the upstream gate valve opened to allow the input side of the pump chamber to be filled from the water source by gravitational action. This cycle is repeated until the temporary storage battery has received a sufficient charge.

A substantially vertical gas storage chamber 15.13, analogous to a gas holder in earlier town gas supply systems, is divided into compartments for hydrogen 15.14 and oxygen by a cofferdam structure 15.14 fed from the water supply by conduits 15.16 adjacent the cofferdam, at the base of which is a polymer electrolyte membrane 15.18 or alternative arrangement for electrolytically splitting the water. Using the power supply from the turbo 15.7, this separates water from the water supply into its separate hydrogen and oxygen components. The hydrogen or other gaseous fuel may be used to power vehicles directly by means of fuel cells or may be fed to a gas distribution network in which it may be utilised to enrich natural gas or distributed directly to consumers. Conveniently, a plurality of such storage chambers may be disposed in a sacrificial network and, when flooding from the upstream water source is imminent the situation may be relieved, in emergency, by evacuating the stored gas to the atmosphere 15.21 via exhaust pipes 15.19 using control valves (not shown). A physical lock gate 15.20, with paddles (also not shown) may be opened also to relieve upstream flooding.

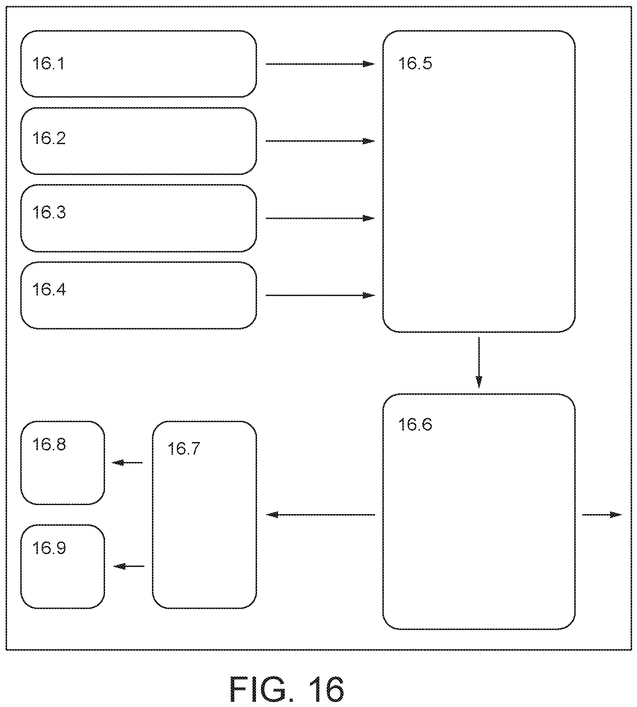

Figure 16 is a schematic of the control system with feeds from environmental sources to monitor the status of the body of water within the system to which it is connected. The controller will ensure the electrical generation system does not cause too much water to flow through it so as to cause a drop in water levels. 16.5 is a machine learning module that takes environmental feeds to understand the overall water status and energy demand. 16.1 records the upstream water level or level in a reservoir. 16.2 is a weather model with specific focus on precipitation, flood and drought. 16.3 monitors the status within the connected canal and river system. 16.4 is an energy demand model. 16.6 outputs an optimised strategy balancing electrical generation with water management. If the system is in flood, then electrical generation can operate at its maximum capacity with the highest water flow rate. In times of drought water is conserved and pumped back upstream to maintain the levels within the canal. At all other times the flow rate is controlled to balance energy generation whilst maintaining optimum water levels. A local controller 16.7 sends signals to 16.8 valves and 16.9 the pumps and generators.

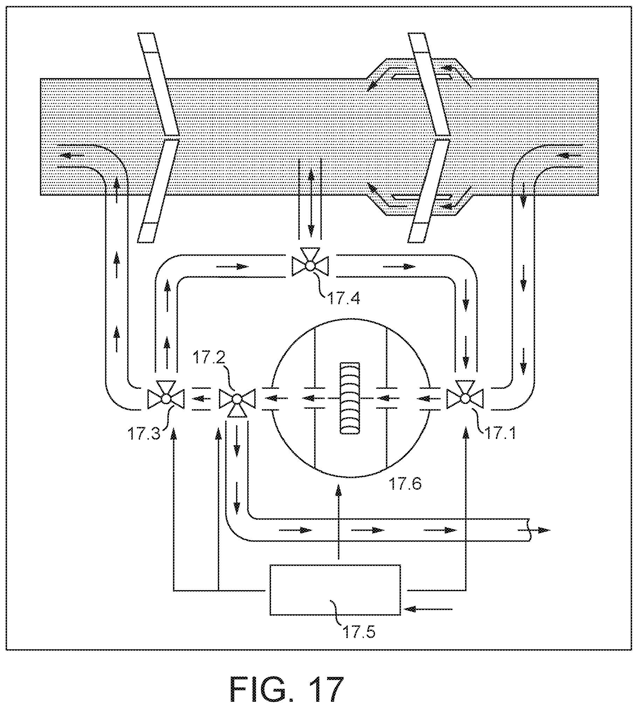

Figure 17 is a schematic plan view of a lock with the electrical energy generation system depicting water flow. 17.5 is the control system explained above and in figure 16 which controls a series of valves 16.1, 16.2, 16.3 and 16.4 to control the flow of water through the turbogenerator 16.6 which can be switched into pump mode if there is a need to conserve water to replenish upstream reservoirs or ponds.

The following table explains how the valves are controlled to meet various environmental and operational conditions.

| Status | Energy Generation and Water Management |
|---|---|
| 1. Normal conditions | Valve 17.1 is switched to allow water to flow into the turbogenerator 17.6 to generate electricity with valve 17.2 set so that water flows to valve 17.3 which is set so water flows into the downstream level of the canal beyond the lower gate of the pound lock. The rate of flow is controlled to ensure the water level in the canal system is maintained at its optimum level without exceeding the volume of water permitted under any extraction agreements. |
| 2. Lockage operation (filling) | When a vessel needs to pass through the lock it is moored within the lock with both the upper and lower gates closed. Valve 17.1 is set to flow water from the upstream level through the turbogenerator to produce electricity. Valve 16.2 is set so water flows on to valve 16.3 which is set to flow water in the direction of valve 17.4 which is set so water flows into the pound lock until the water level is equal to the upstream level. When the desired water level is achieved valve 16.4 is closed and if the canal system is operating under normal environmental conditions valves 17.1, 17.2 and 17.3 can be set to flow as explained in Status 1. If the vessel is travelling in an upstream direction the water will be maintained at the upstream level when the upper gates are opened. If the vessel is travelling downstream then then status 3 explains the operation. Depending on the design of the turbogenerator, the generation efficiency will drop below a meaningful level when the height difference and pressure head and flow drops below a threshold as the levels equalise and at that point the sluice gates may be opened and then the main gates to speed filling. |
| 3. Lockage operation (emptying) | The water in the pound lock is drained to reduce be equal to the downstream level. Valve 17.4 is switched so that water flows in the direction of valve 17.1. Valve 17.1 is set so water flows into the turbogenerator. Valve 17.2 is set so water flows in the direction of valve 17.3 which is set so that water flows into the downstream section of the canal. When the water level within the pound lock is equal to the downstream level valve 17.4 is closed. As with filling, depending on the design of the turbogenerator, the generation efficiency will drop below a meaningful level when the height difference and pressure head and flow drops below a threshold as the levels equalise and at that point the sluice gates may be opened and then the main gates to speed filling. If the canal is operating under normal conditions the valves are set to operate as explained in status 1. |
| | In drought or low water conditions in a water conservation strategy the system may be set to pump water back upstream to empty the lock. This will use the electricity generated during filing, and some more due to efficiency losses, but will conserve water. |
| 4. Flood | When the canal system is in a state of flood then electrical generation can be set to operate at the maximum output level This is achieved by setting valve 17.1 to flow into the turbogenerator and valve 17.2 to flow in the direction of valve 17.3 which is set so water flows into the downstream section of the canal. The valves will be fully opened to achieve the maximum flow rate for the capacity of the pipes. |
| | In such a case the flow may be maximum through the turbogenerator and the control strategy may provide that locking operations use the sluice gates for maximum speed of filling and do not attempt to generate additional energy via the turbogenerator. |
| 5. Drought | In times of drought with the electrical generation system it will not be possible to generate electricity because there would be a detrimental effect upon the canal system caused by a drop in water levels. The system can be switched off so there is no change to water levels by closing off all of the valves. |
| | Alternatively, if there is sufficient water downstream of the lock, the system can be utilised to pump water back upstream to replenish reservoirs and ponds used to feed the canal. 17.6 is switched to pump mode. The normal flow of water in the lower section of pipe would be reversed with valve 17.3 switched so that it travels in the direction of valve 17.4 which is set so water flows on to valve 17.1 which is set so water flows into 17.6 to pump water back upstream with valve 17.2 set so water flows back upstream to feed reservoirs or ponds. |

The above table represents components of a strategy and a particular strategy may be formulated which is more complex. For example with a generally low level in the canal system, the system may generally adopt a water conservation strategy but may still attempt to recover some energy from locking operations or permit some generation during the day or at times of high energy demand or may not engage in active pumping upstream in times of high demand but may adopt a more conservative arrangement at night or at times of low energy demand and may use surplus energy to pump water upstream at night.

Each of the elements and sub features of the control strategy may be provided independently of others, in alternative combinations, or as isolated control features. The invention is defined by the claims.

The various examples mentioned although distinct in physical application relate to extraction of energy from flowing water or its control and accordingly any of the features or sub-features disclosed herein may be provided in combination with other features or examples or in alternative combinations, unless otherwise stated or unless the context clearly precludes or states otherwise.

## Claims

1. A water level control and energy recovery system for a canal having at least one lock (4.1,4.3), the system comprising:
an upstream conduit arranged to be fluidly coupled to water upstream of a canal lock upper gate;
a downstream conduit arranged to be fluidly coupled to water downstream of a canal lock lower gate;
an energy generating arrangement (5.4, 7.3, 14.7, 15.7, 16.6) positioned in a flow conduit between the upstream conduit and the downstream conduit arranged to generate energy from flow of water through the upstream conduit to the downstream conduit;
a control arrangement (17.5) arranged to obtain at least one lock state input related to the state or intended state of the canal lock and to provide a flow control output for controlling the flow through the flow conduit, wherein the control arrangement is further arranged to obtain a canal state indication indicative of available water upstream of the lock and wherein the control arrangement is arranged to produce a flow control output which varies with both the lock state inputs and the canal state indication to implement a flow control strategy for the canal responsive to the available water upstream, wherein the canal state indication is derived from a measure of water level in at least one remote water source feeding the canal upstream of the lock, and further comprising at least one of the following:
a) wherein the canal state indication is derived from at least one predictive water availability parameter indicating likely future state of the canal,
b) wherein the control arrangement is arranged to receive at least one further input indicative of a measure of current or predicted energy demand and to adjust the flow in dependence of said current or predicted energy demand.

2. A system according to claim 1, further including a water storage arrangement and wherein the control arrangement may be arranged to divert water into or from the water storage arrangement.

3. A system according to any preceding claim further including an intermediate conduit arranged for fluid communication with the water in the lock.

4. A system according to any preceding claim operable selectively to recover energy from more than one of the following lock states:-
a) Water flowing into the lock, either (a) from the upstream canal or (b) storage arrangement if provided, with the lower gates closed to fill the lock;
b) Water flowing out of the lock to empty the lock;
c) Water bypassing the lock or flowing into the lock with the lower gates open.

5. A system according to any preceding claim operable selectively to pump water from within the lock with the lower gates closed.

6. A system according to any preceding claim including an interface arranged to obtain an input of current lock state.

7. A system according to any preceding claim arranged to control powered sluice gates associated with the lock.

8. A system according to any preceding claim arranged to monitor lock usage and predict lock usage and to modify the flow control strategy based on monitored or predicted lock usage.

9. A system according to any preceding claim applied to more than one lock in a canal system and wherein the control arrangement is arranged to adjust the flow control strategy for one lock in dependence on information from another lock in the system and/or wherein the canal state indication includes or is adjustable to include an indication of an upstream lock opening or likely vessel passage.

10. A system according to any preceding claim wherein the control arrangement includes a local controller arranged to control the arrangement and a remote server.

11. A system according to any preceding claim including apparatus for providing a representation of control strategies to be viewed and displayed on GUI and optionally wherein an interface is provided to enable control strategies to be modified by a user.

12. A system according to any preceding claim wherein the control arrangement includes a machine learning module to determine estimated canal state from measured parameters and/or to modify control strategies based on observed measurements following application of an initial strategy.

13. A method of controlling water flow and energy recovery in a canal system, in a system according to any preceding claim, comprising obtaining at least one lock state input related to the state or intended state of the canal lock and providing a flow control output for controlling the flow through the conduit, wherein the method further comprises obtaining a canal state indication indicative of available water upstream of the lock and wherein the method is arranged to produce a flow control output which varies with both the lock state inputs and the canal state indication to implement a flow control strategy for the canal responsive to the available water upstream.

14. A method according to Claim 13 arranged to control at least one lock based on information indicative of the state of the lock and at least one further lock upstream of the lock and/or arranged to control more than one lock coupled by a canal in dependence on information relating to the state of both locks.

15. A method according to Claim 13 or 14 further comprising evolving a control strategy for the canal based on applying indications of the canal state and energy usage over time to a machine learning module.

16. A computer program or computer program product arranged to provide a control method for a canal system according to any of Claims 13 to 15.

17. A method of modifying a lock for a canal comprising providing a bypass flow path around the lock and installing a system according to any of Claims 1 to 12 in the bypass flow path.

## Patentansprüche

1. System zur Steuerung des Wasserstandes und zur Energierückgewinnung für einen Kanal mit mindestens einer Schleuse (4.1, 4.3), wobei das System aufweist:
eine stromaufwärts gelegene Leitung, die so angeordnet ist, dass sie mit dem Wasser stromaufwärts eines oberen Tores der Kanalschleuse in Fluidverbindung steht;
eine stromabwärts gelegene Leitung, die so angeordnet ist, dass sie mit dem Wasser stromabwärts eines unteren Tores der Kanalschleuse in Fluidverbindung steht;
eine Energieerzeugungsanordnung (5.4, 7.3, 14.7, 15.7, 16.6), die in einer Strömungsleitung zwischen der stromaufwärts gelegenen Leitung und der stromabwärts gelegenen Leitung angeordnet ist, um Energie aus der Wasserströmung durch die stromaufwärts gelegene Leitung zur stromabwärts gelegenen Leitung zu erzeugen;
eine Steuerungsanordnung (17.5), die dazu eingerichtet ist, mindestens eine Eingabe für den Schleusenzustand zu erhalten, die sich auf den Zustand oder den beabsichtigten Zustand der Kanalschleuse bezieht, und eine Ausgabe für die Strömungssteuerung zur Steuerung der Strömung durch die Strömungsleitung bereitzustellen, wobei die Steuerungsanordnung ferner dazu eingerichtet ist, eine Anzeige des Kanalzustands zu erhalten, die das verfügbare Wasser stromaufwärts der Schleuse anzeigt, und wobei die Steuerungsanordnung dazu eingerichtet ist, eine Ausgabe für die Strömungssteuerung zu erzeugen, die sowohl mit den Eingaben für den Schleusenzustand als auch mit der Anzeige des Kanalzustands variiert, um eine Strömungssteuerungsstrategie für den Kanal zu implementieren, die auf das verfügbare Wasser stromaufwärts reagiert, wobei die Anzeige des Kanalzustands von einer Messung des Wasserstands in mindestens einer entfernten Wasserquelle abgeleitet wird, die den Kanal stromaufwärts der Schleuse speist, und ferner aufweisend mindestens eines der folgenden:
a) wobei die Anzeige des Kanalzustands von mindestens einem prädiktiven Wasserverfügbarkeitsparameter abgeleitet wird, der den wahrscheinlichen zukünftigen Zustand des Kanals angibt,
b) wobei die Steuerungsanordnung dazu eingerichtet ist, mindestens eine weitere Eingabe zu empfangen, die eine Messung des aktuellen oder vorhergesagten Energiebedarfs anzeigt, und die Strömung in Abhängigkeit von dem aktuellen oder vorhergesagten Energiebedarf anzupassen.

2. System nach Anspruch 1, das ferner eine Wasserspeicheranordnung umfasst und wobei die Steuerungsanordnung dazu eingerichtet sein kann, Wasser in oder aus der Wasserspeicheranordnung umzuleiten.

3. System nach einem der vorhergehenden Ansprüche, das ferner eine Zwischenleitung umfasst, die für eine Fluidverbindung mit dem Wasser in der Schleuse angeordnet ist.

4. System nach einem der vorhergehenden Ansprüche, das selektiv betrieben werden kann, um Energie aus mehr als einem der folgenden Schleusenzustände zurückzugewinnen:
a) das Wasser fließt in die Schleuse, entweder (a) aus dem stromaufwärts gelegenen Kanal oder (b) durch eine Speicheranordnung, falls vorhanden, wobei die unteren Tore geschlossen sind, um die Schleuse zu füllen;
b) das Wasser fließt aus der Schleuse, um die Schleuse zu leeren;
c) das Wasser umgeht die Schleuse oder fließt bei geöffneten unteren Toren in die Schleuse.

5. System nach einem der vorhergehenden Ansprüche, das selektiv betrieben werden kann, um Wasser aus dem Inneren der Schleuse zu pumpen, wenn die unteren Tore geschlossen sind.

6. System nach einem der vorhergehenden Ansprüche, das eine Schnittstelle umfasst, die dazu dient, eine Eingabe für den aktuellen Schleusenzustand zu erhalten.

7. System nach einem der vorhergehenden Ansprüche, das zur Steuerung von mit der Schleuse verbundenen angetriebenen Schützentoren eingerichtet ist.

8. System nach einem der vorhergehenden Ansprüche, das dazu eingerichtet ist, die Nutzung der Schleuse zu überwachen und die Nutzung der Schleuse vorherzusagen und die Strömungssteuerungsstrategie auf der Grundlage der überwachten oder vorhergesagten Nutzung der Schleuse zu modifizieren.

9. System nach einem der vorhergehenden Ansprüche, das auf mehr als eine Schleuse in einem Kanalsystem angewandt wird und wobei die Steuerungsanordnung dazu eingerichtet ist, die Strömungssteuerungsstrategie für eine Schleuse in Abhängigkeit von Informationen von einer anderen Schleuse in dem System einzustellen und/oder wobei die Anzeige des Kanalzustands eine Anzeige einer stromaufwärts gelegenen Schleusenöffnung oder einer wahrscheinlichen Schiffspassage umfasst oder so einstellbar ist, dass sie diese umfasst.

10. System nach einem der vorhergehenden Ansprüche, wobei die Steuerungsanordnung eine lokale Steuerung, die zur Steuerung der Anordnung angeordnet ist, und einen entfernten Server umfasst.

11. System nach einem der vorhergehenden Ansprüche, das eine Vorrichtung zur Bereitstellung einer Darstellung von Steuerungsstrategien umfasst, die auf einer grafischen Benutzeroberfläche (GUI) betrachtet und angezeigt werden können, und wobei optional eine Schnittstelle bereitgestellt wird, die es ermöglicht, Steuerungsstrategien durch einen Benutzer zu modifizieren.

12. System nach einem der vorhergehenden Ansprüche, wobei die Steuerungsanordnung ein maschinelles Lernmodul zur Bestimmung des geschätzten Kanalzustands aus gemessenen Parametern und/oder zur Modifizierung von Steuerungsstrategien auf der Grundlage von beobachteten Messungen nach Anwendung einer anfänglichen Strategie umfasst.

13. Verfahren zur Steuerung der Wasserströmung und Energierückgewinnung in einem Kanalsystem, in einem System nach einem der vorhergehenden Ansprüche, aufweisend: Erhalten mindestens einer Eingabe für den Schleusenzustand, die sich auf den Zustand oder den beabsichtigten Zustand der Kanalschleuse bezieht, und Bereitstellen einer Ausgabe für die Strömungssteuerung zur Steuerung der Strömung durch die Leitung, wobei das Verfahren ferner das Erhalten einer Anzeige des Kanalzustands aufweist, die das verfügbare Wasser stromaufwärts der Schleuse angibt, und wobei das Verfahren dazu eingerichtet ist, eine Ausgabe für die Strömungssteuerung zu erzeugen, die sowohl mit den Eingaben des Schleusenzustands als auch mit der Anzeige des Kanalzustands variiert, um eine Strömungssteuerungsstrategie für den Kanal zu implementieren, die auf das verfügbare Wasser stromaufwärts reagiert.

14. Verfahren nach Anspruch 13, das dazu eingerichtet ist, mindestens eine Schleuse auf der Grundlage von Informationen zu steuern, die den Zustand der Schleuse und mindestens einer weiteren Schleuse stromaufwärts der Schleuse anzeigen, und/oder das dazu eingerichtet ist, mehr als eine durch einen Kanal gekoppelte Schleuse in Abhängigkeit von Informationen zu steuern, die sich auf den Zustand beider Schleusen beziehen.

15. Verfahren nach Anspruch 13 oder 14, das ferner die Entwicklung einer Steuerungsstrategie für den Kanal auf der Grundlage der Anwendung von Anzeigen des Kanalzustands und des Energieverbrauchs im Zeitverlauf auf ein maschinelles Lernmodul aufweist.

16. Computerprogramm oder Computerprogrammprodukt, das dazu eingerichtet ist, ein Steuerungsverfahren für ein Kanalsystem nach einem der Ansprüche 13 bis 15 bereitzustellen.

17. Verfahren zum Modifizieren einer Schleuse für einen Kanal, das die Bereitstellung eines Umgehungsströmungsweges um die Schleuse und die Installation eines Systems nach einem der Ansprüche 1 bis 12 in dem Umgehungsströmungsweg aufweist.

## Revendications

1. Système de commande de niveau d'eau et de récupération d'énergie pour un canal disposant d'au moins une écluse (4.1, 4.3), le système comprenant :
une conduite amont agencée pour être couplée de manière fluide à de l'eau en amont d'une porte supérieure d'écluse de canal ;
une conduite aval agencée pour être couplée de manière fluide à de l'eau en aval d'une porte inférieure d'écluse de canal ;
un agencement de génération d'énergie (5.4, 7.3, 14.7, 15.7, 16.6) positionné dans une conduite de débit entre la conduite amont et la conduite aval agencé pour générer de l'énergie à partir du débit d'eau à travers la conduite amont vers la conduite aval ;
un agencement de commande (17.5) agencé pour obtenir au moins une entrée d'état d'écluse liée à l'état ou à l'état visé de l'écluse de canal et pour fournir une sortie de commande de débit pour commander le débit à travers la conduite de débit, dans lequel l'agencement de commande est en outre agencé pour obtenir une indication d'état de canal indiquant l'eau disponible en amont de l'écluse et dans lequel l'agencement de commande est agencé pour produire une sortie de commande de débit qui varie à la fois avec les entrées d'état d'écluse et l'indication d'état de canal pour mettre en oeuvre une stratégie de commande de débit pour le canal sensible à l'eau disponible en amont, dans lequel l'indication d'état de canal est dérivée d'une mesure de niveau d'eau dans au moins une source d'eau à distance alimentant le canal en amont de l'écluse, et comprenant en outre au moins l'un des éléments suivants :
a) dans lequel l'indication d'état de canal est dérivée d'au moins un paramètre prédictif de disponibilité d'eau indiquant l'état futur probable du canal,
b) dans lequel l'agencement de commande est agencé pour recevoir au moins une entrée supplémentaire indiquant une mesure de demande d'énergie actuelle ou prévue et pour régler le débit en fonction de ladite demande d'énergie actuelle ou prévue.

2. Système selon la revendication 1, comprenant en outre un agencement de stockage d'eau et dans lequel l'agencement de commande peut être agencé pour dévier de l'eau dans l'agencement de stockage d'eau ou à partir de celui-ci.

3. Système selon une quelconque revendication précédente, comprenant en outre une conduite intermédiaire agencée pour une communication fluidique avec l'eau dans l'écluse.

4. Système selon une quelconque revendication précédente pouvant fonctionner de manière sélective pour récupérer de l'énergie à partir de plus d'un des états d'écluse suivants :
a) de l'eau s'écoulant dans l'écluse, soit (a) depuis le canal en amont ou (b) l'agencement de stockage, le cas échéant, avec les portes inférieures fermées pour remplir l'écluse ;
b) de l'eau s'écoulant hors de l'écluse pour vider l'écluse ;
c) de l'eau contournant l'écluse ou s'écoulant dans l'écluse avec les portes inférieures ouvertes.

5. Système selon une quelconque revendication précédente pouvant fonctionner de manière sélective pour pomper de l'eau depuis l'intérieur de l'écluse avec les portes inférieures fermées.

6. Système selon une quelconque revendication précédente comprenant une interface agencée pour obtenir une entrée d'état d'écluse actuel.

7. Système selon une quelconque revendication précédente agencé pour commander des portes d'écluse motorisées associées à l'écluse.

8. Système selon une quelconque revendication précédente agencé pour surveiller une utilisation d'écluse et prévoir une utilisation d'écluse et pour modifier la stratégie de commande de débit sur la base d'une utilisation surveillée ou prévue.

9. Système selon une quelconque revendication précédente appliqué à plus d'une écluse dans un système de canal et dans lequel l'agencement de commande est agencé pour régler la stratégie de commande de débit pour une écluse en fonction d'informations provenant d'une autre écluse du système et/ou dans lequel l'indication d'état de canal comporte ou peut être réglée pour comporter une indication d'une ouverture d'écluse en amont ou d'un passage de navire probable.

10. Système selon une quelconque revendication précédente, dans lequel l'agencement de commande comprend un dispositif de commande local agencé pour commander l'agencement et un serveur à distance.

11. Système selon une quelconque revendication précédente comprenant un appareil pour fournir une représentation de stratégies de commande à visualiser et à afficher sur une interface utilisateur graphique (GUI) et facultativement dans lequel une interface est fournie pour permettre la modification de stratégies de commande par un utilisateur.

12. Système selon une quelconque revendication précédente, dans lequel l'agencement de commande comprend un module d'apprentissage automatique pour déterminer un état de canal estimé à partir de paramètres mesurés et/ou pour modifier des stratégies de commande sur la base de mesures observées à la suite de l'application d'une stratégie initiale.

13. Procédé de commande de débit d'eau et de récupération d'énergie dans un système de canal, dans un système selon une quelconque revendication précédente, comprenant l'obtention d'au moins une entrée d'état d'écluse liée à l'état ou à l'état visé de l'écluse de canal et la fourniture d'une sortie de commande de débit pour commander le débit à travers la conduite, dans lequel le procédé comprend en outre l'obtention d'une indication d'état de canal indiquant l'eau disponible en amont de l'écluse et dans lequel le procédé est agencé pour produire une sortie de commande de débit qui varie à la fois avec les entrées d'état d'écluse et l'indication d'état de canal pour mettre en oeuvre une stratégie de commande de débit pour le canal sensible à l'eau disponible en amont.

14. Procédé selon la revendication 13, agencé pour commander au moins une écluse sur la base d'informations indiquant l'état de l'écluse et au moins une écluse supplémentaire en amont de l'écluse et/ou agencé pour commander plus d'une écluse couplée par un canal en fonction d'informations liées à l'état des deux écluses.

15. Procédé selon la revendication 13 ou 14, comprenant en outre le fait de faire évoluer une stratégie de commande pour le canal sur la base de l'application d'indications de l'état de canal et de l'utilisation d'énergie dans le temps à un module d'apprentissage automatique.

16. Programme informatique ou produit de programme informatique agencé pour fournir un procédé de commande pour un système de canal selon l'une quelconque des revendications 13 à 15.

17. Procédé de modification d'une écluse pour un canal comprenant la fourniture d'un trajet de débit de contournement autour de l'écluse et l'installation d'un système selon l'une quelconque des revendications 1 à 12 dans le trajet de débit de contournement.
